# EUROPEAN PATENT SPECIFICATION

(11) **EP 2 379 428 B1**
(45) Date of publication and mention of the grant of the patent: **03.04.2013**
(21) Application number: 10700017.6
(22) Date of filing: 04.01.2010
(51) Int. Cl.: B65G 17/24, B65G 47/24

(54) **CONVEYOR FOR VEGETABLE PRODUCTS**
FÖRDERBAND FÜR PFLANZENPRODUKTE
CONVOYEUR POUR PRODUITS VÉGÉTAUX

(30) Priority: 20.01.2009 IT PN20090004
(43) Date of publication of application: 26.10.2011
(73) Proprietor: Unitec S.p.A., 48022 Lugo (IT)
(72) Inventor: BENEDETTI, Luca, I-48020 Savarna (Ravenna) (IT)
(74) Representative: Gonella, Mario
(86) International application number: PCT/EP2010/050018
(87) International publication number: WO 2010/084027

(56) References cited:
- GB-A- 2 077 577
- NL-C2- 1 033 082

## Description

The present invention refers to a continuous-flow conveyor for handling vegetable products according to the preamble of claim 1 as disclosed in GN-A-2077577, allowing said vegetable products to individually undergo measurement of particular properties thereof

According to current techniques and practices, each such vegetable product is graded, sorted out and gathered on the basis of pre-determined characteristics or properties thereof; to this purpose, such properties are therefore detected by measurement on each single product and are then used to grade, sort out and allot each one of the thus measured products to respective containers or destination areas according to the value of the measured property, so that in each one of said collection means or areas there are solely delivered those products whose measured property turns out as having a value falling within a given, pre-defined tolerance range.

As far as the properties are concerned, which are generally selected for measurement in view of sorting out vegetable products, these are known to mainly include the colour or hue, the ripening degree, the size, the weight, and the like.

As regards the measurement of such properties as colour or hue, size and ripening degree of these products, the generally used technique consists of having each single product examined by appropriate optical means.

The fact that this optical measurement of the selected properties is performed on each single product while the same is moving along the conveyor is of course dictated by the need for each and any cause or mode to be avoided, which would call for the products to be temporarily stopped, since this would obviously affect not only the productivity of the conveying and sorting plant, but also the productivity of the whole product treatment process.

To this purpose, the products are transported and delivered onto an appropriate moving conveyor, which is adapted to individualize, i.e. separate each single product from each other for it to be then conveyed in this state to a measurement station, in which the optical properties thereof will undergo due analysis, as explained above.

Usually, such continuously moving conveyors are provided to include a continuous sequence of "pockets", or moving receptacles, each one of which moves along in synchronism with the conveyor.

As used both hereinbefore and hereinafter in this connection, the term "pocket", or "receptacle", shall not be understood as referring to or indicating an actual material means or a particular physical element or member, but rather the simple geometrical space being defined on the conveyor by respective functional and material elements or parts as appropriate, as this shall be thoroughly explained below.

Furthermore, and according again to the prior art, these continuously moving conveyors are comprised of a continuous sequence of "pockets" that are created by a succession of rollers that are linked with each other into a synchronous forward motion toward the measurement or grading station; each one of these rollers is free to individually rotate in a continuous motion about its own axis, which extends transversely relative to the forward motion thereof.

The association of these rollers with each other forms the actual conveyor, wherein it is the space comprised between a roller and the preceding or, for the matter, the following one that defines a respective one of the above-mentioned pockets, actually.

Each fruit or vegetable product is therefore transported and delivered into a respective one of these pockets and, since such pocket moves along with a continuous motion towards the measurement station, even the vegetable product delivered into it is carried towards said station.

Although described in quite a concise manner, this technique is anyway widely known to those skilled in the art, so that no need arises for it to be explained to any greater detail, actually.

As it moves along on the conveyor, each product is most obviously caused to roll according to a revolving axis that extends parallel to the axis of rotation of the rollers themselves, and the measurement station performs the related measurement on a product that is revolving in a regular manner without any variation in its speed or orientation.

The above-described solution is known to be effective in allowing for an optimum optical analysis of each product. However, under some particular circumstances, it has been found that situations of uncertainty may arise in the measurement of the optical property of the product being inspected.

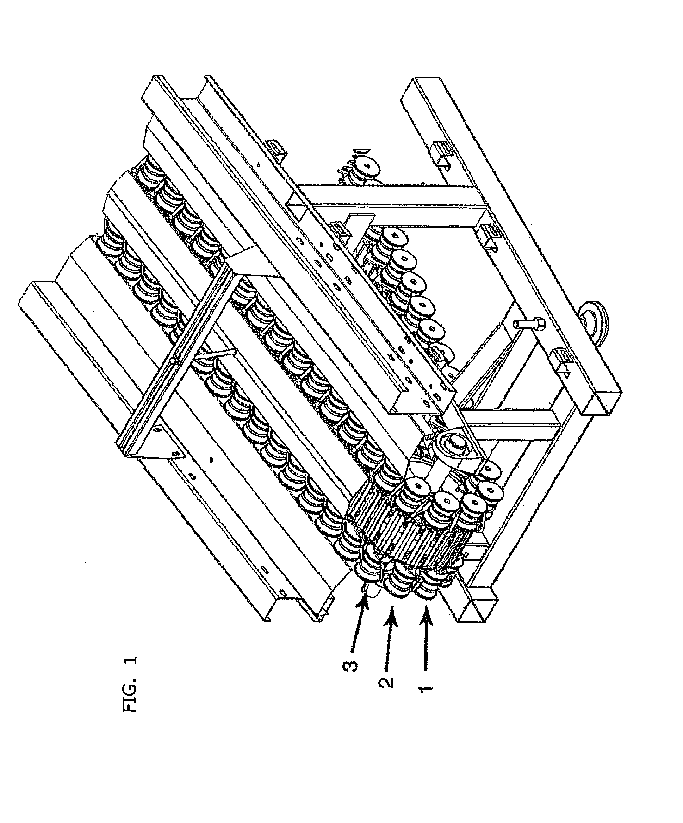

As a matter of fact, while fruit products having a roundish shape (e.g., oranges) may be considered as representing and acting as spheres, whose axis of rotation is therefore not likely to be altered in its orientation by the revolving motion of the rollers, it may on the other hand occur that, in the case of products having a particularly asymmetrical or irregular shape, such as typically kiwis or lemons, the same products tend to turn up with two different orientations, i.e.:
a) in the case that such product is delivered onto the conveyor to be accommodated therein with the major axis thereof lying already substantially parallel to the revolving axis of the roller (see Figure 1), its orientation will not change as it is caused to revolve, so that the television camera, or any other optical scanning means used in the measurement station, will therefore be able to correctly analyze the entire surface thereof (due to the product acting in fact as a cylinder that revolves about its own axis);
b) in the case that the product comes on the contrary to lie thereon so oriented as to have the major axis thereof substantially orthogonal to the revolving axis of the roller, i.e. aligned with the forward moving direction of the conveyor, the rotary motion of the two respective rollers is transmitted to the product, which will of course tend to move - after a certain time - into a same arrangement as in the preceding case a).

It can therefore be most readily appreciated that, if such change in the orientation of a product of the above-noted kind takes place as such product is moving through the measurement or optical-inspection station, the same product would not be able to be analyzed in a correct manner, owing to and on account of the rapid modification of the image being generated and, therefore, picked up for analysis.

As a result, the product might be allotted to a grading class that does not correspond to the actual properties thereof.

It can at this point be equally most readily appreciated that such incorrect grading of the product is quite likely to immediately turn into an economic damage being suffered due to the need for the products to be re-processed, a longer processing time being required, or a reduction in customer satisfaction in general.

In an attempt to do away with such drawback, it has been tried to find a solution by providing particular kinds of pockets as created by rollers of a kind that does not really show any symmetrical shape, but rather an asymmetrical one.

Known from the disclosures in US 3,144,121 and WO 03/106308 is in fact a solution based on providing conveyors for fruit and vegetable products, wherein such conveyors are equipped with rollers that create respective pockets adapted to pre-orientate in a preferential manner the products being received herein.

In particular, the above-mentioned publication WO 03/106308 teaches to provide said pockets by assigning them an elongate shape ("... the transporting positions have an at least partly elongate form", cf. page 2 lines 14-16, and claim 2).

However, the solution described in such publication, although constituting an improvement over the prior art, is not effective in doing entirely away with the given problem.

It has in fact been found that the time, i.e. the travelling length of the conveyor required to allow the product to arrange itself into a sufficiently stabilized orientation is still excessively long, since the product is not caused to undergo any particular or specific constraint or impelling force that would physically urge it into the desired orientation, if the quite modest asymmetrically urging effect arising in this sense between the surface of the product and the surface of the rollers is disregarded.

As a matter of fact, according to the solution disclosed in the above-cited patent publication, an irregularly shaped product can be delivered into the respective pocket at random, i.e. without any definite orientation, so that it can fall into the related pocket with an orientation that is the opposite of the actually desired one; in order to allow the product to re-orientate itself in the correct manner as desired, the need then arises for it to be caused to revolve and rotate a certain number of times within the respective pocket, without even being certain that this will effectively allow the product to move into the desired orientation, actually.

Anyway, the time required to have the product eventually oriented in a manner that may be considered acceptable on an average, is in all cases lengthened under obvious disadvantages of a production-related nature for the whole plant, which such conveyor is a part of.

A further drawback is to be found in the circumstance in which the vegetable products being handled show up in a rather elongate, but still quite irregular a shape, i.e. without any appreciable bulginess on a side thereof. In this case, in fact, there might quite easily occur that each such product comes almost immediately to settle down in a stable manner in the pocket into which it is delivered, regardless of which the optimum position or orientation thereof might also be, actually, wherein it can most readily be appreciated that even such situation may quite easily lead to a basic uncertainty in the results of the measurement performed on the product by the optical means provided to this purpose in the measurement station of the plant.

It would therefore be desirable, and it actually is a main object of the present invention, to provide a kind of conveyor for fruit and vegetable products, which is adapted to feed in a continuous manner a measurement station that is equipped with optical means capable of scanning, i.e. analyzing the surface of such products, said conveyor being effective in doing substantially away with the above-described drawbacks and disadvantages of prior-art conveyors.

According to the present invention, this aim is reached in a conveyor as stated in the appended claim 1.

Anyway, features and advantages of the present invention will be more readily understood from the detailed description that is given below by way of nonlimiting example with reference to the accompanying drawings, in which:
- Figure 1 is a perspective view of a part of a plant including a conveyor embodied generally according to the prior art, but adapted to use the present invention;
- Figure 2 is a view of the conveyor shown in Figure 1, however without the structure of the plant supporting such conveyor;
- Figure 3 is a simplified perspective view of the functional parts of the conveyor shown in Figure 2, according to the present invention;
- Figure 3A is a planar projection, partially see-through view of some component parts shown in Figure 3, as viewed from a position at the same height as the conveyor in a direction orthogonal thereto;
- Figure 4 is a side view of a component part shown in Figure 3A, as viewed in an isolated manner;
- Figure 5 is a similar view as the one appearing in Figure 4 of an improved embodiment of the same component part;
- Figure 6 is a partially see-through view similar to the one appearing in Figure 5 of two contiguous component parts of a conveyor according to the present invention;
- Figure 7 is a planer top view of two component parts of the conveyor according to the present invention.

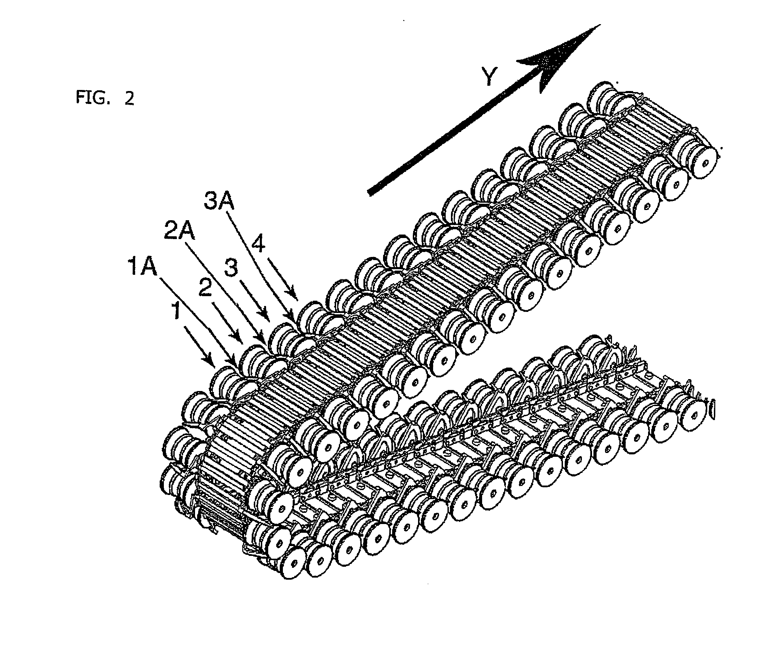

With reference to Figures 1, 2 and 7, a conveyor according to the present invention comprises a plurality of rotary support bodies 1, 2, 3, 4 ... disposed in a sequence following each other, in a side-by-side arrangement, along a common alignment axis Y, so as to define a respective one of a plurality of conveyance positions, or pockets as they shall be referred to hereinafter, 1 A, 2A, 3A ... between each thus formed pair of rotary support bodies 1-2, 2-3, 3-4, ...

Each one of said pockets is made and provided in such manner as to be adapted to receive a respective vegetable product that has to be oriented in a desired manner.

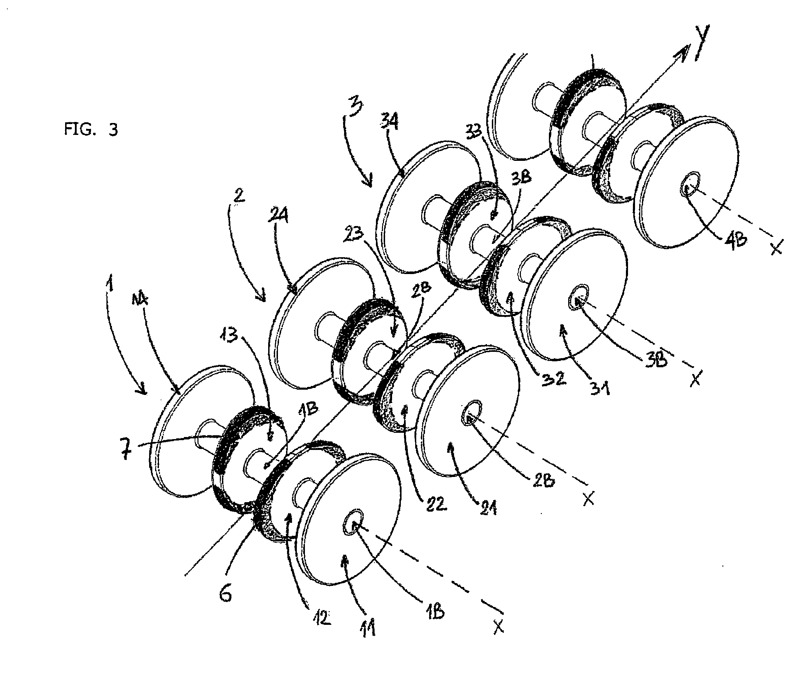

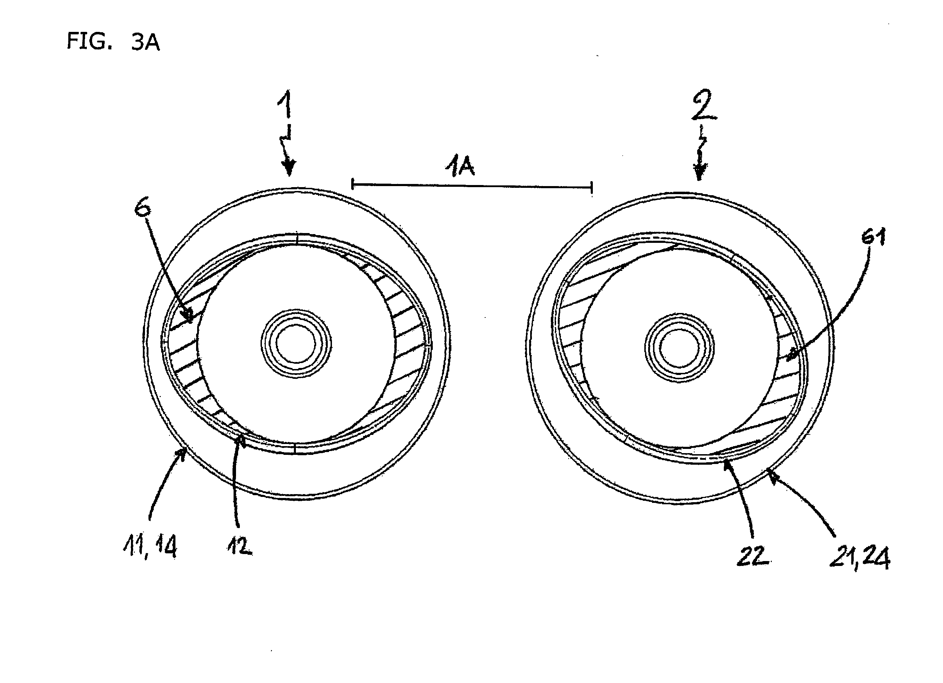

To this purpose, and with particular reference to Figures 3 and 3A, each rotary support body that forms a side of a given pocket comprises:
- a respective shaft 1 B, 2B, 3B ..., and
- a plurality of disks, i.e.
   ● the disks 11, 12, 13, 14 ... fitted on to the shaft 1 B,
   ● the disks 21, 22, 23, 24 ... fitted on to the shaft 2B,
   ● the disks 31, 32, 33, 34 ... fitted on to the shaft 3B, and so on.

The illustration in Figure 3 shows that each shaft is provided with four respective disks; however, it shall be of course appreciated that even other solutions, i.e. solutions involving any different number of disks, are possible within the scope of the present invention.

In addition, Figure 3A can be noticed to show a planar, partially see-through view of a pair of contiguous rotary support bodies, as viewed on a plane extending orthogonal to the rotating shafts 1 B and 2B thereof.

All these shafts are driven to rotate at the same angular speed and in the same direction, and the size of said disks and the spacing, i.e. distance of the shafts from each other are so selected as to allow the vegetable products that are delivered into the respective pockets to be accommodated in an appropriate manner therein, as well as to allow them to rotate in a regular manner.

Anyway, the structure that has been summarily described above represents a conveyor of a generally known kind, so that any further description in greater detail thereof is intentionally omitted. As far as any detail is concerned, which might possibly fail to be specified or explained in this context, the reader should therefore refer to prior-art literature, including the afore-cited patent publication, of course.

In the course of extended studies and experiments performed on the possibility for fruit and vegetable products with an irregular shape to be oriented in a pre-determined manner prior to them reaching and moving through the measurement station (not shown in the Figures, since largely known as such in the art), it has been repeatedly found that an excellent effect of orientation and stabilization of the same products can be obtained if the rotary motion of said products within the respective pockets accommodating them is in turn caused to take place in an irregular manner or, in other words, if the rotation of the vegetable product in the pocket is not performed in a regular manner, but is on the contrary caused to occur irregularly, or according to an irregular pattern, by a definite, i.e. specifically provided "disturbance" or interfering item capable of causing the same product to undergo some anomalous urging force.

In this connection, it should be specially remarked that in prior-art conveyors of the currently used kind, including those provided with irregularly shaped pockets, such as the ones formed into diabolo-shaped bodies, the vegetable product is in no case and under no circumstance urged into moving in an irregular manner or in a way that includes a force component urging it outwards relative to the accommodating pocket.

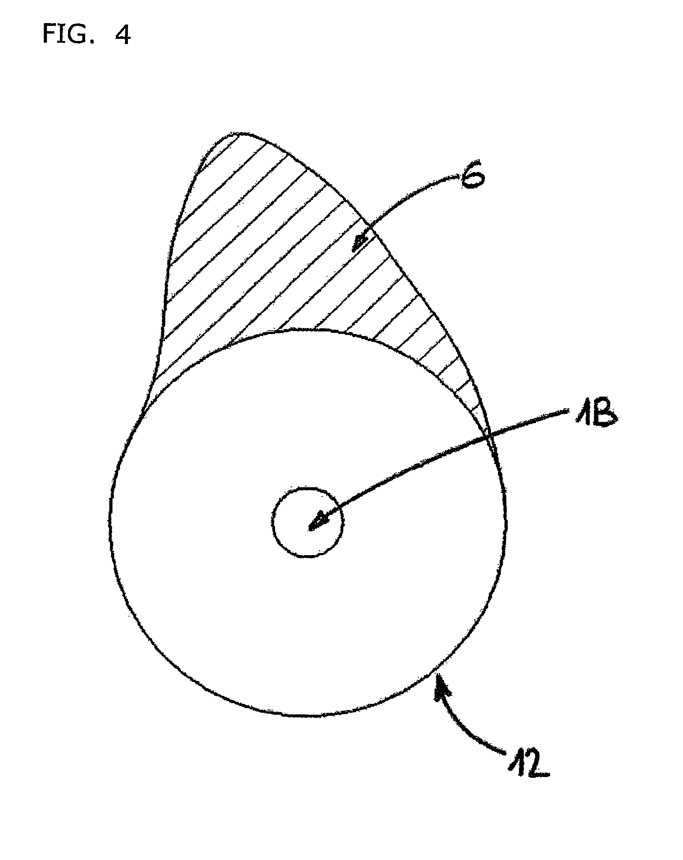

On the contrary, according to the present invention on at least one of said disks and, for the matter, at least one disk for each one of said rotary bodies, there is provided a first additional eccentric portion 6 and 61, respectively, which is formed with an irregular shape on the outer edge of the same disk, and which extends radially therefrom, as this is shown symbolically in Figure 4.

It should be particularly stressed that the term "eccentric" is in this case used to define a non-circular contour of the outer edge of the related disk, in the sense that said eccentric portion is a portion that is not symmetrical to at least one plane passing through the axis of rotation of the rotary body, which said disk featuring such eccentricity belongs to.

It can also be most readily appreciated that said eccentricity may be constituted by a portion that is either protruding or recessing relative to the contiguous portions, although said eccentricity is in this case represented as a protruding portion for reasons of greater simplicity and better understanding of the drawings.

If such kind of disk is therefore used in one of the afore-described rotary bodies, during the rotation of such disk the vegetable product, which is accommodated and is rolling within the respective pocket, is periodically - and with a certain frequency owing to the actual rate of rotation of said bodies - urged towards the outside of the pocket.

Owing to the position of the product thereupon, the same product is pushed upwards to fall back into the innermost position thereof within the same pocket as soon as said eccentric portion 6 rotates into an inward position not in contact with the product.

It has however been also found that the product does not fall back exactly into the initial position thereof, but - owing to the irregular shape thereof - may rather fall back - and usually does so - into a more stable position relative to the same pocket.

Briefly, the present invention substantially involves a "disturbance", or an outwards pushing effect, being created to act on the vegetable product so that, when exerted, such "disturbance" is able to modify the arrangement of the product to such an extent that, when said "disturbance" effect stops, the same product is able to arrange itself in a spontaneous manner into an arrangement within the pocket that is more stable with respect to the irregularity of its shape.

Of course, such "disturbance" effect recurs at each rotation of the shafts and the disks; however, the product itself comes in a very short time to "find" its position of maximum stability, from which it will no more move away as the shafts and the disks featuring the afore-mentioned eccentricity keeps rotating thereafter.

To state it in other, simpler words, what is practically created is an artificial shaking or tumbling of the vegetable product within the respective pocket, until the same product eventually finds its position of maximum balance, i.e. stability, from which it will no longer move away although such tumbling action continues, actually.

In particular, if the product being handled has an elongate shape, it will settle into a stabilized position when the longer axis thereof comes to orientate itself in roughly or substantially the same direction of the rotating shafts of the rotary support bodies, this being the basic purpose of the present invention, actually.

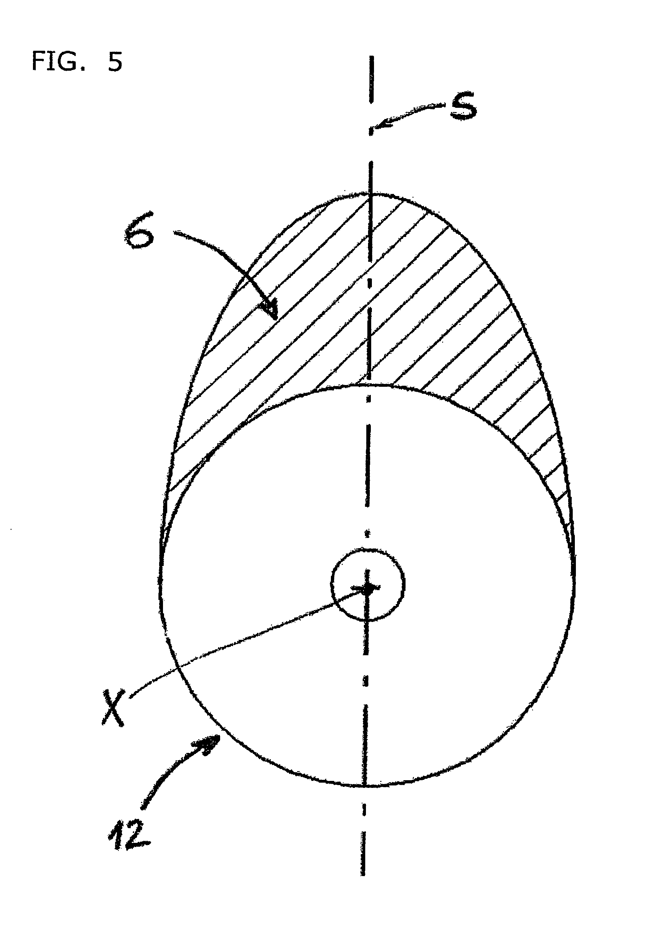

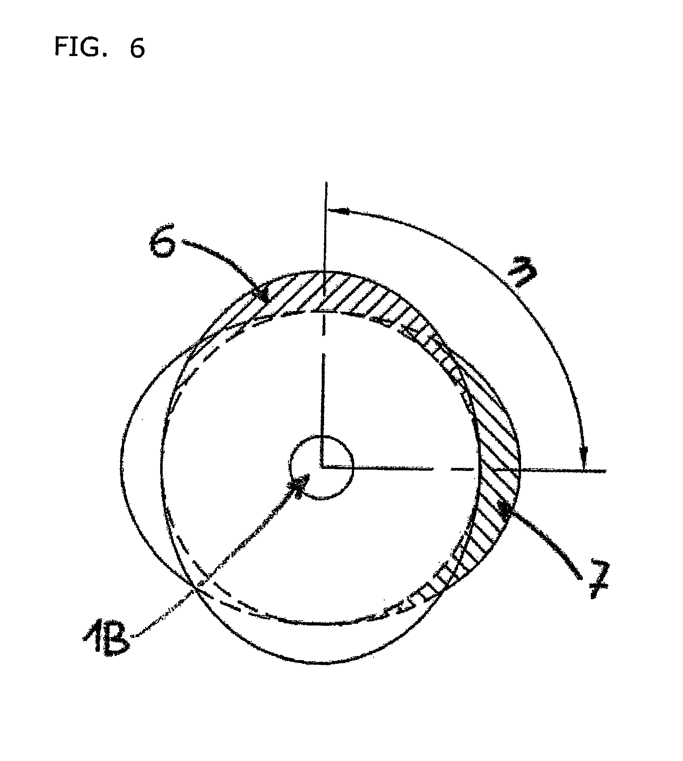

Some basic improvements and possible modifications in the embodiment of the present invention need anyway to be illustrated at this point, i.e.:
1) With reference to Figure 5, a first improvement involves providing said eccentric portion 6 in a symmetrical manner relative to a plane s passing through the axis X of the shaft 1 B, which the disk 2 carrying said eccentric portion 6 is mounted to; further to being effective in facilitating the overall design and, as a result, the production of the related disk, this contrivance also allows the conveyor to be used with a reverse rotation of the respective rollers, which can be most readily appreciated to be effective in increasing the operating flexibility of the same conveyor to a significant extent.
2) A second improvement relates to the shape of the other disks that are press-fitted or shrink-fitted on to the same shaft; with reference to Figures 3 and 6, it has in fact been found that also a second disk 13 may advantageously be provided with a respective second eccentric portion 7 generally similar to the above-cited first eccentric portion 6; this second eccentric portion 7 shall however not be disposed or orientated in the same way and direction as said first eccentric portion 6, since the vegetable product would in this case be acted upon by the two eccentric portions at the same moment and urged in the same direction, and this would of course not fail to practically nullify the afore-noted tumbling effect that comes in fact to arise if the kind of urging action exerted thereupon is not compensated by an urging action of a similar kind.

As a result, with reference to Figure 6 showing a symbolical planar projection of said eccentric portions 6 and 7 on a plane lying orthogonally to the common rotating shaft 1 B, said second eccentric portion 7 on the disk 3 should be oriented at a definite angle n relative to the first eccentric portion 6.

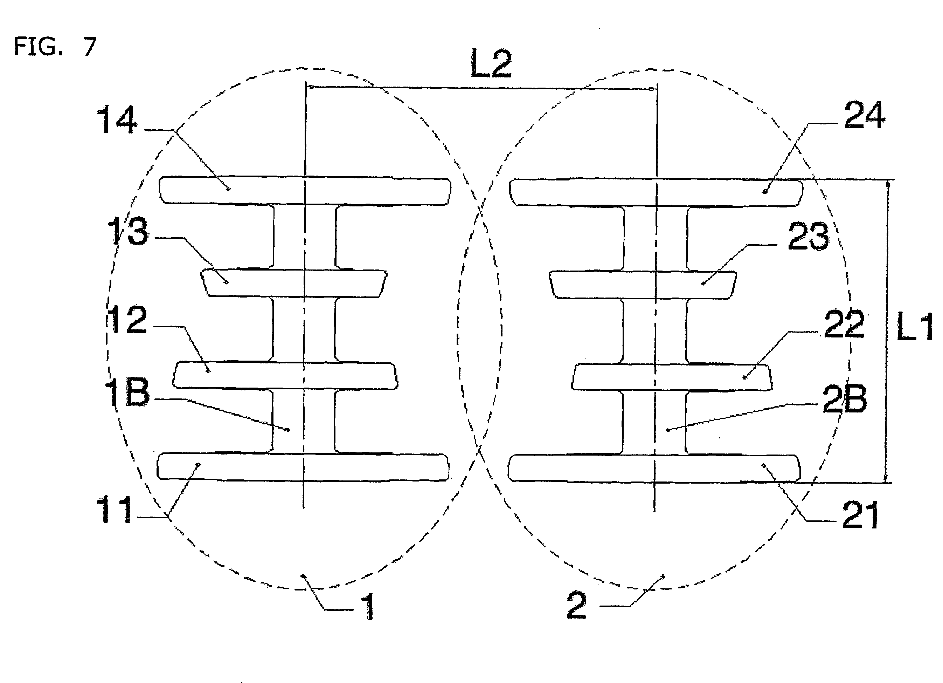

It has been experimentally found that the optimum value of said angle should advantageously be the value corresponding to roughly a right angle.
3) A third improvement lies in providing said disks 2 and 3, jointly with the respective eccentric portions 6 and 7, with respective roughly elliptical shapes centered on the same common axis X, as this is again shown in Figure 6.
4) This solution, in fact, is effective in combining the twofold advantage of a simpler and easier production of the respective disks and the ability of such disks to anyway complying with the need for the vegetable products being handled to be "tumbled" in a progressive manner, while ensuring a perceivable extent of displacement (disturbance effect) without giving rise to excessive accelerations or jerks that might damage the same products.
5) With reference to Figure 3, a further improvement derives from the fact that a rotary body according to the present invention comprises four disks 11, 12, 13, 14 provided in a side-by-side, parallel arrangement relative to each other, and that only the two middle or inner disks 12 and 13 are provided with a respective eccentric portion 6, 7 in an angularly offset disposition relative to each other, as detailed afore. In this way, it is made sure that also small-sized vegetable products, which do not come into contact with the outer disks 11 and 14, can be duly handled by the inventive conveyor, since they would anyway be affected by the action of said eccentric portions of the inner disks irrespective of the small size thereof that practically prevents them from being able to touch the outer disks.
6) Yet another improvement relates to following contrivance: with reference to Figure 7, in a preferred manner the conveying pockets should be extended in the length direction or, in other words, longitudinally in the forward-moving direction of the conveyor; such measure is taken in view of avoiding the so-called "pocket gaps", i.e. the situation in which, when the vegetable products are overfed as compared with the actual capacity of the conveyor, they can get fitted in pairs into the same pocket.

To this purpose, the width L1 of a generic pocket shall be appropriately smaller than the centre-to-centre distance L2 from each other of the rotating shafts of the two rotary bodies defining the related pocket.
7) A last improvement is based on the fact that the whole conveyor as described hereinbefore, including said rotating rollers thereof, is driven so as to be able to move in a continuous and synchronous manner with a "chain-like" motion towards and into said measurement station, while therefore avoiding any possible "pocket gap" that would impair the possibility for the benefits and advantages deriving from the present invention to be reached to the full extent thereof.

## Claims

1. Conveyor, especially for vegetable products, comprising:
- a plurality of rotating supporting bodies (1, 2, 3, 4) placed in a linear arrangement, and provided with respective rotating shafts (1B, 2B, 3B,...), whose rotating axis (X) are parallel to each other and orthogonal with respect to a common aligning axis (Y), and which make up between each couple of contiguous rotating bodies a respective transporting position or pocket, each of which being able of carrying out a respective vegetable product, wherein the shape of said rotating bodies is properly defined in order to orient, or to force the orientation of said vegetable products, into a respective stability position with respect to said rotation axis (X),
- means able of making said rotating bodies to rotate in a continuous and synchronous way (same angular speed),
**characterized in that**
- each of said rotating bodies comprises a plurality of distinct disc elements (11, 12, 13, 14), arranged on respective parallel planes, and separately engaged at a pre-defined reciprocal distance on the respective rotating shaft (1, 2B, 3B,...) said disc elements being orthogonally placed to the respective said shaft,
- and **in that** at least one (12, 13) of said disc elements, for each of said rotating bodies, shows at least a first eccentric end portion (6) which can be protruding or recessed with regard to any other portion of the same disc element, with respect to the respective rotating axis (X).

2. Conveyor according to claim 1, **characterized in that** said disc element (12) with said protruding portion (6) shows a substantially symmetrical shape with respect to a plane (s) passing on the rotating axis (X) of the respective rotating shaft (12).

3. Conveyor according to any of the previous claims, **characterized in that** a second (13) of said disc elements, belonging of the same rotating body, is provided with a respective second protruding portion (7), referred to any other portion of the same second disc element (13), with regard to the rotating shaft (X) of the respective rotating body (1), and **in that** said first and second protruding portions (6, 7) are oriented with a not zero angle (n) with respect to the rotating axis (X) of the respective rotating shaft (1 B).

4. Conveyor according to claim 3, **characterized in that** said not zero angle (n) is substantially a square angle.

5. Conveyor according to any of the previous claims, **characterized in that** at least one of said eccentric portions (6, 7) shows an elliptic shape, and **in that** the center point of said ellipses is preferably arranged in correspondence to the respective said rotating axis (X).

6. Conveyor according to any of the previous claims, **characterized in that** each of said rotating bodies is provided with respective four rotating disc elements (11, 12, 13, 14), (21, 22, 23, 24) aligned to the respective rotation axis (X), and **in that** said eccentric portions (6, 7) are arranged on the two respective disc elements (12, 13) which are internally mounted.

7. Conveyor according to any of the previous claims, **characterized in that** said pockets (1A, 2A) are extended preferably **on the length,** in the direction parallel to said rotating axis (X).

8. Conveyor according to any of the previous claims, **characterized in that** it is provided with operating means able of transporting in a continuous way said rotating bodies along said aligning axis (Y) towards a measuring station.

## Patentansprüche

1. Fördervorrichtung, insbesondere für Pflanzenprodukte, aufweisend:
eine Mehrzahl von rotierenden tragenden Körpern (1, 2, 3, 4), die in einer linearen Anordnung platziert sind und mit jeweiligen Drehachsen (1B, 2B, 3B, ...) versehen sind, deren Drehachsen (X) parallel zueinander und rechtwinklig bezüglich einer gemeinsamen Fluchtungsachse (Y) sind, und die zwischen jedem Paar von angrenzenden rotierenden Körpern eine jeweilige Transportposition oder -tasche errichten, von denen jede fähig ist, ein jeweiliges Pflanzenprodukt zu tragen, wobei die Gestalt der rotierenden Körper geeignet definiert ist, um die Pflanzenprodukte in eine jeweilige Stabilitätsposition bezüglich der Drehachse (X) auszurichten oder die Ausrichtung zwangsweise herbeizuführen,
Einrichtungen, die fähig sind, die rotierenden Körper in kontinuierlicher und synchroner Weise (gleiche Winkelgeschwindigkeit) in Rotation zu versetzen,
**dadurch gekennzeichnet, dass**
jeder der rotierenden Körper eine Mehrzahl von sich unterscheidenden Scheibenelementen (11, 12, 13, 14) aufweist, die auf jeweiligen parallelen Ebenen angeordnet sind und die separat in vorbestimmtem wechselseitigem Abstand auf der jeweiligen Drehachse (1 B, 2B, 3B, ...) in Eingriff sind, wobei die Scheibenelemente rechtwinklig auf der jeweiligen Achse angeordnet sind,
und dadurch, dass mindestens eines (12, 13) der Scheibenelemente, für jeden der rotierenden Körper, mindestens einen ersten exzentrischen Endabschnitt (6) aufweist, der bezüglich jeglichem anderen Abschnitt desselben Scheibenelementes vorragend oder zurückgesetzt sein kann, bezogen auf die jeweilige Drehachse (X).

2. Fördervorrichtung nach Anspruch 1, **dadurch gekennzeichnet, dass** das Scheibenelement (12) mit dem vorragenden Abschnitt (6) im Wesentlichen symmetrische Gestalt bezüglich einer oder mehreren Ebenen zeigt, die durch die Drehachse (X) der jeweiligen Drehachse (12) verlaufen.

3. Fördervorrichtung nach einem der vorhergehenden Ansprüche, **dadurch gekennzeichnet, dass** ein zweites (13) der Scheibenelemente, das zu demselben rotierenden Körper gehört, mit einem jeweiligen zweiten vorragenden Abschnitt (7) versehen ist, und zwar vorragenden im Vergleich zu irgendeinem anderen Abschnitt dieses zweiten Scheibenelementes (13) bezüglich der Drehachse (X) des jeweiligen rotierenden Körpers (1), und dass die ersten und zweiten vorragenden Abschnitte (6, 7) mit einem Winkel (n) bezüglich der Drehachse (X) der jeweiligen Drehachse (1 B) ausgerichtet sind, der nicht Null beträgt.

4. Fördervorrichtung nach Anspruch 3, **dadurch gekennzeichnet, dass** der nicht Null betragende Winkel (n) im Wesentlichen ein rechter Winkel ist.

5. Fördervorrichtung nach einem der vorhergehenden Ansprüche, **dadurch gekennzeichnet, dass** mindestens einer der exzentrischen Abschnitte (6, 7) elliptische Gestalt zeigt, und dass der Mittelpunkt dieser Ellipsen vorzugsweise in Übereinstimmung mit der jeweiligen von diesen Drehachsen (X) angeordnet ist.

6. Fördervorrichtung nach einem der vorhergehenden Ansprüche, **dadurch gekennzeichnet, dass** jeder der rotierenden Körper jeweils mit vier rotierenden Scheibenelementen (11, 12, 13, 14), (21, 22, 23, 24) versehen ist, die zur jeweiligen Drehachse (X) ausgerichtet sind, und dass die exzentrischen Abschnitte (6, 7) auf den zwei jeweiligen Scheibenelementen (12, 13) angeordnet sind, die intern montiert sind.

7. Fördervorrichtung nach einem der vorhergehenden Ansprüche, **dadurch gekennzeichnet, dass** sich die Taschen (1A, 2A) vorzugsweise in der Länge, in Richtung parallel zur Drehachse (X) erstrecken.

8. Fördervorrichtung nach einem der vorhergehenden Ansprüche, **dadurch gekennzeichnet, dass** sie mit Betriebseinrichtungen versehen ist, die fähig sind, in kontinuierlicher Weise die rotierenden Körper entlang der Fluchtungsachse (Y) hin zu einer Messstation zu transportieren.

## Revendications

1. Convoyeur, spécialement pour produits végétaux, comprenant :
- une pluralité de corps de support rotatifs (1, 2, 3, 4) placés dans un agencement linéaire, et dotés de tiges rotatives respectives (1B, 2B, 3B, ...), dont les axes rotatifs (X) sont parallèles les uns aux autres et orthogonaux par rapport à un axe d'alignement commun (Y), et qui constituent entre chaque couple de corps rotatifs contigus une position ou poche de transport respective, dont chacune est capable de porter un produit végétal respectif, dans lequel la forme desdits corps rotatifs est correctement définie afin d'orienter ou de forcer l'orientation desdits produits végétaux, dans une position de stabilité respective par rapport auxdits axes rotatifs (X),
- des moyens capables de faire tourner lesdits corps rotatifs d'une manière continue et synchrone (vitesse angulaire identique),
**caractérisé en ce que**
- chacun desdits corps rotatifs comprend une pluralité d'éléments formant disques distincts (11, 12, 13, 14), agencés sur des plans parallèles respectifs, et engagés séparément à une distance réciproque prédéfinie sur la tige rotative respective (1B, 2B, 3B, ...), lesdits éléments formant disques étant placés orthogonalement à ladite tige respective,
- et **en ce qu'**au moins un (12, 13) desdits éléments formant disques, pour chacun desdits corps rotatifs, présente au moins une première portion d'extrémité excentrique (6) qui peut faire saillie ou être évidée par rapport à n' importe quelle autre portion du même élément formant disque, par rapport à l'axe rotatif respectif (X).

2. Convoyeur selon la revendication 1, **caractérisé en ce que** ledit éléments formant disque (12) avec ladite portion faisant saillie (6) présente une forme sensiblement symétrique par rapport à un plan (s) passant sur l'axe rotatif (X) de la tige rotative respective (12).

3. Convoyeur selon l'une quelconque des revendications précédentes, **caractérisé en ce qu'**un deuxième (13) desdits éléments format disques, faisant partie du même corps rotatif, est doté d'une deuxième portion faisant saillie respective (7), par rapport à n'importe quelle autre portion du même deuxième élément formant disque (13), par rapport à l'axe rotatif (X) du corps rotatif respectif (1), et **en ce que** lesdites première et deuxième portions faisant saillie (6, 7) sont orientées avec un angle non nul (n) par rapport à l'axe rotatif (X) de la tige rotative respective (1B).

4. Convoyeur selon la revendication 3, **caractérisé en ce que** ledit angle non nul (n) est sensiblement un angle droit.

5. Convoyeur selon l'une quelconque des revendications précédentes, **caractérisé en ce que** au moins une desdites portions excentriques (6, 7) présente une forme elliptique, et **en ce que** le point central desdites ellipses est agencé de préférence en correspondance avec ledit axe rotatif respectif (X).

6. Convoyeur selon l'une quelconque des revendications précédentes, **caractérisé en ce que** chacun desdits corps rotatifs est doté de quatre éléments formant disques rotatifs respectifs (11, 12, 13, 14), (21, 22, 23, 24) alignés sur l'axe rotatif respectif (X), et **en ce que** lesdites portions excentriques (6, 7) sont agencées sur les deux éléments formant disques respectifs (12, 13) qui sont montés à l'intérieur.

7. Convoyeur selon l'une quelconque des revendications précédentes, **caractérisé en ce que** lesdites poches (1A, 2A) sont étendues de préférence sur la longueur, dans le sens parallèle audit axe rotatif (X).

8. Convoyeur selon l'une quelconque des revendications précédentes, **caractérisé en ce qu'**il est doté de moyens de fonctionnement capables de transporter de manière continue lesdits corps rotatifs le long dudit axe d'alignement (Y) vers une station de mesure.
